# EUROPEAN PATENT SPECIFICATION

(11) **EP 3 843 093 B1**
(45) Date of publication and mention of the grant of the patent: **03.05.2023**
(21) Application number: 21163128.8
(22) Date of filing: 17.03.2021
(51) Int. Cl.: G10L 25/69, G10L 25/30

(54) **MODEL EVALUATION METHOD AND DEVICE, AND ELECTRONIC DEVICE**
MODELLBEURTEILUNGSVERFAHREN UND -VORRICHTUNG UND ELEKTRONISCHE VORRICHTUNG
PROCÉDÉ ET DISPOSITIF D'ÉVALUATION DE MODÈLE ET DISPOSITIF ÉLECTRONIQUE

(30) Priority: 21.05.2020 CN 202010437127
(43) Date of publication of application: 30.06.2021
(73) Proprietor: Beijing Baidu Netcom Science and Technology Co., Ltd., Beijing 100085 (CN)
(72) Inventor: ZHENG, Lin, Beijing, 100085 (CN); CHEN, Changbin, Beijing, 100085 (CN); MA, Xiaokong, Beijing, 100085 (CN); SUN, Yujuan, Beijing, 100085 (CN)
(74) Representative: Jordan, Volker Otto Wilhelm

(56) References cited:
- GB-A- 2 423 903
- US-A1- 2013 080 172
- US-A1- 2017 278 506

## Description

### TECHNICAL FIELD

The present disclosure relates to the technology of data processing, especially the technical field of audio data processing, and particularly relates to a model evaluation method, a model evaluation device, and an electronic device.

### BACKGROUND

Speech synthesis is a technique of converting text into audio signals to output, and it plays an important role in the field of human-computer interaction, and can be widely applied. Personalized speech synthesis is to synthesize audio signals that sound very similar to a real person by means of speech synthesis, and has been widely applied in the fields of maps, smart speakers, etc.

At present, there are many personalized speech synthesis models used for synthesizing audio signals, but the reproduction degrees of the audio synthesized by those personalized speech synthesis models vary. Therefore, it is very important to evaluate the personalized speech synthesis models. In this context, US 2013/080172 A1 describes a procedure for TTS evaluation using vector quantization and comparison of codebooks of acoustic features between user's speech and corresponding TTS output according to a statistical distance.

Currently, a reproduction degree of the audio synthesized by a personalized speech synthesis model, that is, the similarity between the synthesized audio and the pronunciation of a real person, is evaluated by use of a pre-trained voiceprint verification model, so as to evaluate the quality of the personalized speech synthesis model. However, in the case of using the voiceprint verification model, the synthesized audio signals are usually subjected to reproduction verification one by one, resulting in low evaluation efficiency.

### SUMMARY

The present disclosure provides a model evaluation method, a model evaluation device and an electronic device according to independent claims 1, 4 and 7, respectively. The present disclosure also provides a non-transitory computer-readable storage medium according to independent claim 8.

According to the technical means of the present disclosure, the M first voiceprint features are clustered to obtain the K first central features, and the N second voiceprint features are clustered to obtain the J second central features; and the cosine distances between the K first central features and the J second central features are calculated to obtain the first distance, so that the overall reproduction degree of the M first audio signals synthesized by using the first to-be-evaluated speech synthesis model can be evaluated based on the first distance, thereby increasing the evaluation efficiency of the first to-be-evaluated speech synthesis model. The present disclosure solves the problem of low evaluation efficiency of personalized speech synthesis model in the prior art.

It should be understood that the content of the SUMMARY is not intended to indicate key features or important features of the embodiments of the present disclosure, or limit the scope of the present disclosure. Other features of the present disclosure will become apparent from the following description.

### BRIEF DESCRIPTION OF THE DRAWINGS

The drawings are intended to enable better understanding of the technical solutions of the present disclosure, and do not constitute any limitation to the present disclosure. In the drawings:
Fig. 1 is a flowchart illustrating a model evaluation method according to a first embodiment of the present disclosure;
Fig. 2 is a flowchart illustrating a process of evaluating a second to-be-evaluated speech synthesis model;
Fig. 3 is a first schematic structural diagram of a model evaluation device according to a second embodiment of the present disclosure;
Fig. 4 is a second schematic structural diagram of a model evaluation device according to the second embodiment of the present disclosure; and
Fig. 5 is a block diagram of an electronic device configured to implement a model evaluation method provided by the embodiment of the present disclosure.

### DETAILED DESCRIPTION

Exemplary embodiments of the present disclosure, including various details of the embodiments, are illustrated below in conjunction with the accompanying drawings for facilitating the understanding of the present disclosure, but it should be understood that the embodiments are provided merely for the purpose of illustration. Therefore, it should be understood by those skilled in the art that various changes and modifications can be made to the embodiments described herein without departing from the scope of the present disclosure. In addition, well-known functions and structures are not described below for clarity and conciseness.

### First Embodiment

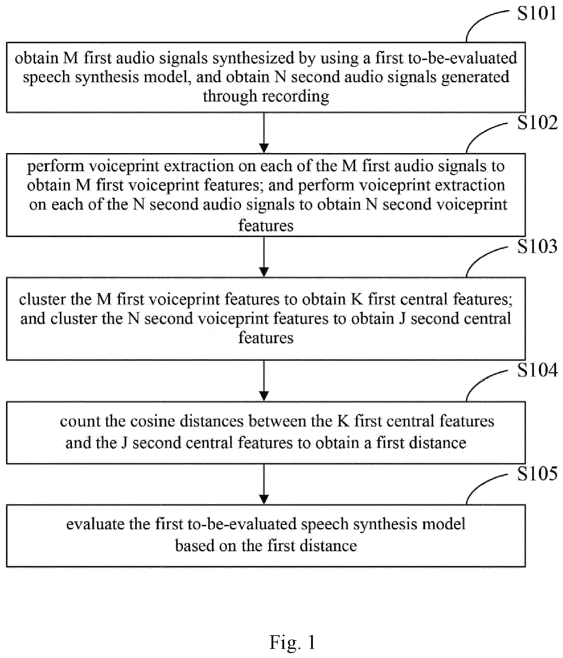

As shown in Fig. 1, the present disclosure provides a model evaluation method, including the following steps:

step S101: obtaining M first audio signals synthesized by using a first to-be-evaluated speech synthesis model, and obtaining N second audio signals generated through recording.

In the embodiment, the first to-be-evaluated speech synthesis model is a personalized speech synthesis model, and aims to synthesize audio signals that sound similar to a real person, so as to be applied in the fields of maps, smart speakers, etc.

The first to-be-evaluated speech synthesis model can be generated through pre-training of a first preset model. The first preset model is a model substantially constructed according to a set of first algorithms, and it is necessary to train the first preset model to obtain the parameter data thereof, so as to obtain the first to-be-evaluated speech synthesis model.

Specifically, a plurality of audio signals, which are generated through recording of a text by a first user, are taken as training samples. For example, 20 or 30 audio signals, which are generated through recording of a text by the first user, are taken as the training samples. The training samples are input into the first preset model, and the first preset model is trained to obtain the parameter data thereof, so as to generate a first to-be-evaluated speech synthesis model of the first user.

After the first to-be-evaluated speech synthesis model of the first user is generated, a batch of first audio signals is generated by use of a batch of texts and the first to-be-evaluated speech synthesis model of the first user. Specifically, each text is input into the first to-be-evaluated speech synthesis model to output the first audio signal corresponding to the text, and finally M first audio signals are obtained. Meanwhile, a batch of second audio signals is generated through recording by the first user, and finally N second audio signals are obtained.

M may be the same as or different from N, which is not specifically limited here. In order to make an evaluation result of the first to-be-evaluated speech synthesis model more accurate, M and N are usually large numbers, such as 20 or 30.

Step S102: performing voiceprint extraction on each of the M first audio signals to obtain M first voiceprint features; and performing voiceprint extraction on each of the N second audio signals to obtain N second voiceprint features.

The voiceprint of the first audio signal may be extracted with a plurality of methods. For example, a traditional statistical method can be used in the voiceprint extraction of the first audio signals to obtain statistical characteristics of the first audio signals, and the statistical characteristics serve as the first voiceprint features. As another example, deep neural networks (DNNs) can be used in the voiceprint extraction of the first audio signals to obtain DNN voiceprint features of the first audio signals, and the DNN voiceprint features serve as the first voiceprint features.

The voiceprint extraction methods for the second audio signals are similar to those for the first audio signals, and thus will not be described here.

Step S 103: clustering the M first voiceprint features to obtain K first central features; and clustering the N second voiceprint features to obtain J second central features.

The M first voiceprint features can be clustered by using a conventional or new clustering algorithm to obtain the K first central features. K can be obtained by using a clustering algorithm based on the actual situations of the cosine distance between every two first voiceprint features among the M first voiceprint features.

For example, by using a clustering algorithm, the M first voiceprint features can be divided into three, four, five or more groups according to the cosine distance between every two first voiceprint features among the M first voiceprint features, and K is the number of the groups. The cosine distance between every two first voiceprint features in each group of the first voiceprint features, i.e. an intra-group distance, is smaller than a preset threshold, and the cosine distances between the first voiceprint features in one group and the first voiceprint features in another group, i.e. inter-group distances, are greater than another preset threshold.

After the clustering, a first central feature of each group is calculated according to the first voiceprint features of such group. For example, the first central feature of a certain group may be a voiceprint feature obtained by averaging the plurality of first voiceprint features in such group. In this way, the K first central features are finally obtained.

The clustering methods for the N second voiceprint features are similar to those for the M first voiceprint features, and thus will not be described here.

K may be the same as or different from J, which is not specifically limited here. In addition, M, N, K and J are positive integers greater than 1, M is greater than K, and N is greater than J.

Step S104: counting the cosine distances between the K first central features and the J second central features to obtain a first distance.

For every first central feature, a cosine distance between the first central feature and each of the J second central features is calculated to obtain the cosine distances corresponding to the first central feature. A cosine distance between two central features can represent the similarity between the two central features.

For example, the K first central features are first central feature A1, first central feature A2, and first central feature A3, and the J second central features are second central feature B1, second central feature B2, and second central feature B3. The cosine distances from the first central feature A1 to the second central feature B1, to the second central feature B2, and to the second central feature B3 are calculated to obtain the cosine distances A1B1, A1B2 and A1B3 corresponding to the first central feature A1. The cosine distances from the first central feature A2 to the second central feature B1, to the second central feature B2, and to the second central feature B3 are calculated to obtain the cosine distances A2B1, A2B2 and A2B3 corresponding to the first central feature A2. The cosine distances from the first central feature A3 to the second central feature B1, to the second central feature B2, and to the second central feature B3 are calculated to obtain the cosine distances A3B1, A3B2 and A3B3 corresponding to the first central feature A3. Finally, a plurality of cosine distances between the K first central features and the J second central features are obtained.

Then, the plurality of cosine distances between the K first central features and the J second central features are calculated to obtain the first distance. The plurality of cosine distances between the K first central features and the J second central features may be calculated by using several methods. For example, the cosine distances are added up to obtain the first distance. As another example, the cosine distances are averaged to obtain the first distance.

In addition, since the K first central features are obtained based on the clustering of the M first voiceprint features, the J second central features are obtained based on the clustering of the N second voiceprint features, and the first distance is obtained based on the calculation of the plurality of cosine distances between the K first central features and the J second central features, the first distance can be used to evaluate an overall similarity between the M first voiceprint features and the N second voiceprint features.

That is, the first distance can be used to evaluate an overall similarity in pronunciation between the M first audio signals and the N second audio signals generated through recording by a real person, that is, to evaluate a reproduction degree of the M first audio signals synthesized by using the first to-be-evaluated speech synthesis model. When the first distance is smaller than a first preset threshold, it is indicated that the M first audio signals have a high reproduction degree; and when the first distance is greater than or equal to the first preset threshold, it is indicated that the M first audio signals have a low reproduction degree.

Step S 105: evaluating the first to-be-evaluated speech synthesis model based on the first distance.

Since the M first audio signals are synthesized by using the first to-be-evaluated speech synthesis model, the first distance can be used to evaluate the first to-be-evaluated speech synthesis model, that is, the first to-be-evaluated speech synthesis model can be evaluated based on the first distance.

In the embodiment, the M first voiceprint features are clustered to obtain the K first central features, and the N second voiceprint features are clustered to obtain the J second central features; and the cosine distances between the K first central features and the J second central features are calculated to obtain the first distance, so that the overall reproduction degree of the M first audio signals synthesized by using the first to-be-evaluated speech synthesis model can be evaluated based on the first distance. In this way, the reproduction degrees of a large batch of first audio signals can be evaluated quickly, which increases the evaluation efficiency of the first to-be-evaluated speech synthesis model.

Moreover, as compared with the prior art, the model evaluation method provided by the embodiment performs model evaluation without using a voiceprint verification model, which avoids the defect that the voiceprint verification model needs to be updated regularly, and reduces cost of model evaluation. Meanwhile, in the model evaluation process, by clustering the first voiceprint features and the second voiceprint features to obtain the first central features and the second central features respectively, the personalized features of the audio signals are fully considered, thereby improving accuracy of model evaluation.

Further, since the first to-be-evaluated speech synthesis model is generated through pre-training of the first preset model, and the first preset model is substantially a model constructed according to a set of algorithms, it is possible to, according to the embodiment, generate first to-be-evaluated speech synthesis models of a plurality of users by using the first preset model, and evaluate the first preset model by evaluating those first to-be-evaluated speech synthesis models, that is, evaluate the algorithms used in the construction of the first preset model. Therefore, the embodiment can also improve the evaluation efficiency of personalized speech synthesis algorithms.

For example, a first preset model is constructed by using a personalized speech synthesis algorithm, and first to-be-evaluated speech synthesis models of a plurality of users are generated by using the first preset model, and are separately evaluated. Then, the first preset model is evaluated based on the evaluation results of the first to-be-evaluated speech synthesis models of the plurality of users; and, in the case where the evaluations of the first to-be-evaluated speech synthesis models of most or all of the plurality of users are successful, it is determined that the evaluation of the first preset model is successful, that is, the evaluation of the personalized speech synthesis algorithm used in the construction of the first preset model is successful.

Optionally, the step of counting the cosine distances between the K first central features and the J second central features to obtain the first distance includes:
for every first central feature, counting the cosine distance between the first central feature and each of the second central features to obtain J cosine distances corresponding to the first central feature, and calculating a sum of the J cosine distances corresponding to the first central feature to obtain a cosine distance sum corresponding to the first central feature; and
calculating a sum of the cosine distance sums corresponding to the K first central features to obtain the first distance.

In this implementation, the plurality of cosine distances between the K first central features and the J second central features are calculated, and then are added up to obtain the first distance, i.e. a total distance between the K first central features and the J second central features. The total distance can represent an overall similarity between the M first voiceprint features and the N second voiceprint features. Therefore, in this implementation, the overall similarity in pronunciation between the M first audio signals and the N second audio signals generated through recording by a real person can be evaluated based on the total distance, that is, the reproduction degree of the M first audio signals can be evaluated, so that the reproduction degrees of a large batch of first audio signals can be evaluated quickly, which increases the evaluation efficiency of the first to-be-evaluated speech synthesis model.

Optionally, the step of evaluating the first to-be-evaluated speech synthesis model based on the first distance includes:
in the case where the first distance is smaller than a first preset threshold, determining that the evaluation of the first to-be-evaluated speech synthesis model is successful; and
in the case where the first distance is greater than or equal to the first preset threshold, determining that the evaluation of the first to-be-evaluated speech synthesis model is not successful.

In this implementation, in the case where the first distance is smaller than the first preset threshold, it can be determined that the M first audio signals have high reproduction degrees as a whole, so that it can be determined that the evaluation of the first to-be-evaluated speech synthesis model used for synthesizing the M first audio signals is successful. In the case where the first distance is greater than or equal to the first preset threshold, it can be determined that the M first audio signals have low reproduction degrees as a whole, so that it can be determined that the evaluation of the first to-be-evaluated speech synthesis model used for synthesizing the M first audio signals is not successful, and the first to-be-evaluated speech synthesis model needs to be improved.

The first preset threshold can be set according to actual situations, and may be set relatively small in the fields requiring high reproduction degree of synthesized audio.

Optionally, after obtaining the M first audio signals synthesized by using the first to-be-evaluated speech synthesis model and obtaining the N second audio signals generated through recording, the model evaluation method further includes:
obtaining T third audio signals synthesized by using a second to-be-evaluated speech synthesis model;
performing voiceprint extraction on each of the T third audio signals to obtain T third voiceprint features;
clustering the T third voiceprint features to obtain P third central features;
counting the cosine distances between the P third central features and the J second central features to obtain a second distance; and
evaluating the first to-be-evaluated speech synthesis model or the second to-be-evaluated speech synthesis model based on the first distance and the second distance.

Both T and P are positive integers greater than 1, and T is greater than P.

In this implementation, the second to-be-evaluated speech synthesis model is a to-be-evaluated speech synthesis model of the first user, and it is also a personalized speech synthesis model, and aims to synthesize audio signals that sound similar to a real person, so as to be applied in the fields of maps, smart speakers, etc.

The second to-be-evaluated speech synthesis model can be generated through pre-training of a second preset model. The second preset model is a model substantially constructed according to a set of second algorithms, and it is necessary to train the second preset model to obtain the parameter data thereof, so as to obtain the second to-be-evaluated speech synthesis model. The second algorithms may be the algorithms obtained by upgrading the first algorithms, or the competing algorithms in the same kind as the first algorithms.

Specifically, a plurality of audio signals, which are generated through recording of a text by the first user, are taken as training samples. For example, 20 or 30 audio signals, which are generated through recording of a text by the first user, are taken as the training samples. The training samples are input into the second preset model, and the second preset model is trained to obtain the parameter data thereof, so as to generate the second to-be-evaluated speech synthesis model of the first user.

After the second to-be-evaluated speech synthesis model is generated, a batch of third audio signals is generated by use of a batch of texts and the second to-be-evaluated speech synthesis model of the first user. Specifically, each text is input into the second to-be-evaluated speech synthesis model to output the third audio signal corresponding to the text, and finally the T third audio signals are obtained.

M may be the same as or different from T, which is not specifically limited here. In order to make an evaluation result of the second to-be-evaluated speech synthesis model more accurate, T is usually a large number, such as 20 or 30.

In this implementation, the voiceprint extraction methods for the third audio signals are similar to those for the first audio signals, the clustering methods for the T third voiceprint features are similar to those for the M first voiceprint features, and the methods of counting the cosine distances between the P third central features and the J second central features are similar to those of counting the cosine distances between the K first central features and the J second central features, so that those methods will not be repeated here.

After the second distance is obtained by counting the cosine distances between the P third central features and the J second central features, the first to-be-evaluated speech synthesis model or the second to-be-evaluated speech synthesis model can be evaluated based on the first distance and the second distance.

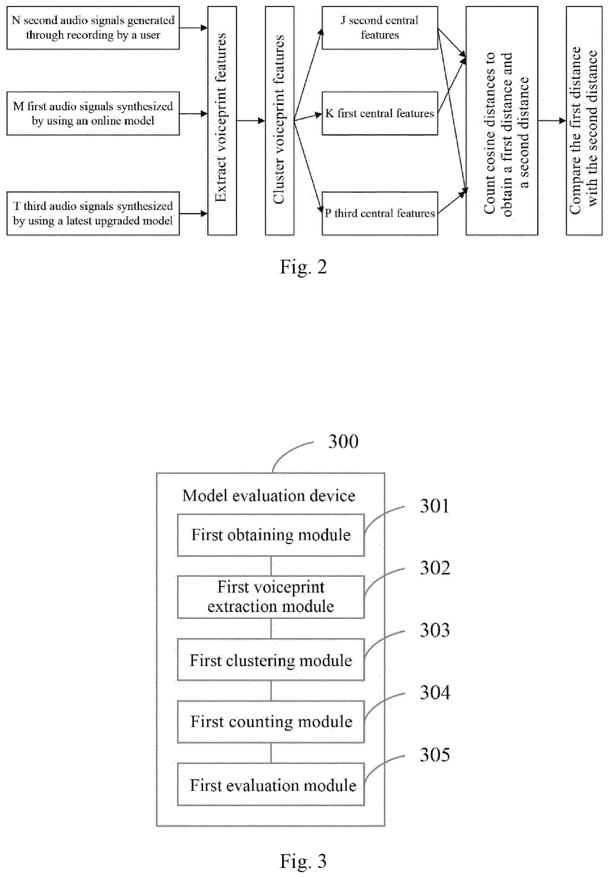

Specifically, in the case where the second algorithms are the algorithms obtained by upgrading the first algorithms, it is generally necessary to evaluate the second to-be-evaluated speech synthesis model. As shown in Fig. 2 which is a flowchart illustrating a process of evaluating the second to-be-evaluated speech synthesis model, the N second audio signals generated through recording by the user, the M first audio signals synthesized by using the first to-be-evaluated speech synthesis model (i.e. an online model), and the T third audio signals synthesized by using the second to-be-evaluated speech synthesis model (a latest upgraded model) are subjected to voiceprint extraction to obtain the M first voiceprint features, the N second voiceprint features, and the T third voiceprint features, respectively.

Then, the M first voiceprint features, the N second voiceprint features, and the T third voiceprint features are clustered to obtain the K first central features, the J second central features, and the P third central features, respectively.

The cosine distances between the K first central features and the J second central features to obtain the first distance, and meanwhile, the cosine distances between the P third central features and the J second central features are calculated to obtain the second distance.

Finally, the first distance and the second distance are compared with each other, and it is determined that the reproduction degree of the T third audio signals synthesized by using the second to-be-evaluated speech synthesis model is higher than that of the M first audio signals synthesized by using the first to-be-evaluated speech synthesis model when the second distance is smaller than the first distance, so that it can be determined that the evaluation of the second to-be-evaluated speech synthesis model is successful. Otherwise, it can be determined that the evaluation of the second to-be-evaluated speech synthesis model is not successful, and the second algorithms need to be upgraded again.

In the case where the second algorithms are the competing algorithms in the same kind as the first algorithms, it is generally necessary to evaluate the first to-be-evaluated speech synthesis model. The first distance and the second distance are compared with each other, and it is determined that the reproduction degree of the T third audio signals synthesized by using the second to-be-evaluated speech synthesis model is lower than that of the M first audio signals synthesized by using the first to-be-evaluated speech synthesis model when the second distance is greater than the first distance, so that it can be determined that the evaluation of the first to-be-evaluated speech synthesis model is successful. Otherwise, it can be determined that the evaluation of the first to-be-evaluated speech synthesis model is not successful, and the first algorithms need to be upgraded.

In this implementation, the T third voiceprint features are clustered to obtain the P third central features, and the cosine distances between the P third central features and the J second central features are calculated to obtain the second distance, so that the overall reproduction degree of the T third audio signals synthesized by using the second to-be-evaluated speech synthesis model can be evaluated based on the second distance. In this way, the reproduction degrees of a large batch of third audio signals can be evaluated quickly, which increases the evaluation efficiency of the second to-be-evaluated speech synthesis model. Meanwhile, by comparing the first distance with the second distance, the reproduction degree of the T third audio signals synthesized by using the second to-be-evaluated speech synthesis model can be compared with the reproduction degree of the M first audio signals synthesized by using the first to-be-evaluated speech synthesis model, which further realizes a comparison between different personalized speech synthesis algorithms, so that the personalized speech synthesis algorithms can be evaluated with improved algorithm evaluation efficiency.

Optionally, the cosine distance between every two first central features among the K first central features is greater than a second preset threshold; and the cosine distance between every two second central features among the J second central features is greater than a third preset threshold.

In this implementation, by setting the cosine distance between every two first central features among the K first central features to be greater than the second preset threshold, and the cosine distance between every two second central features among the J second central features to be greater than the third preset threshold, the personalized features of the audio signals are fully considered, thereby improving the accuracy of model evaluation.

The second preset threshold and the third preset threshold can be set according to actual situations. In order to fully consider the personalized features of the audio signals and ensure the accuracy of model evaluation, the larger the second and third preset thresholds are, the better, that is, the larger the inter-group distances are, the better.

It should be noted that the plurality of optional implementations of the model evaluation method provided by the present disclosure can be realized after being combined with each other, or be realized independently. The present disclosure does not make any limitation on how the implementations are realized.

### Second Embodiment

As shown in Fig. 3, the present disclosure provides a model evaluation device 300, including:
a first obtaining module 301, which is configured to obtain M first audio signals synthesized by using a first to-be-evaluated speech synthesis model, and obtain N second audio signals generated through recording;
a first voiceprint extraction module 302, which is configured to perform voiceprint extraction on each of the M first audio signals to obtain M first voiceprint features, and perform voiceprint extraction on each of the N second audio signals to obtain N second voiceprint features;
a first clustering module 303, which is configured to cluster the M first voiceprint features to obtain K first central features, and cluster the N second voiceprint features to obtain J second central features;
a first calculation module 304, which is configured to calculate the cosine distances between the K first central features and the J second central features to obtain a first distance; and
a first evaluation module 305, which is configured to evaluate the first to-be-evaluated speech synthesis model based on the first distance.

M, N, K and J are positive integers greater than 1, M is greater than K, and N is greater than J.

Optionally, the first calculation module 304 is specifically configured to calculate, for every first central feature, the cosine distance between the first central feature and each second central feature to obtain J cosine distances corresponding to the first central feature, calculate a sum of the J cosine distances corresponding to the first central feature to obtain a cosine distance sum corresponding to the first central feature, and calculate a sum of the cosine distance sums corresponding to the K first central features to obtain the first distance.

Optionally, the first evaluation module 305 is specifically configured to determine that the evaluation of the first to-be-evaluated speech synthesis model is successful in the case where the first distance is smaller than a first preset threshold, and determine that the evaluation of the first to-be-evaluated speech synthesis model is not successful in the case where the first distance is greater than or equal to the first preset threshold.

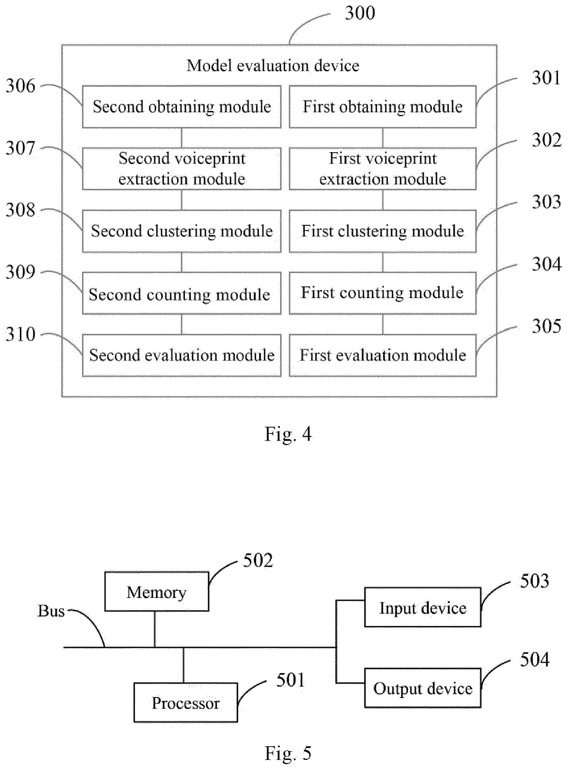

Optionally, as shown in Fig. 4, the present disclosure further provides a model evaluation device 300. Based on the modules shown in Fig. 3, the model evaluation device 300 further includes:
a second obtaining module 306, which is configured to obtain T third audio signals synthesized by using a second to-be-evaluated speech synthesis model;
a second voiceprint extraction module 307, which is configured to perform voiceprint extraction on each of the T third audio signals to obtain T third voiceprint features;
a second clustering module 308, which is configured to cluster the T third voiceprint features to obtain P third central features;
a second calculation module 309, which is configured to calculate the cosine distances between the P third central features and the J second central features to obtain a second distance; and
a second evaluation module 310, which is configured to evaluate the first to-be-evaluated speech synthesis model or the second to-be-evaluated speech synthesis model based on the first distance and the second distance.

Both T and P are positive integers greater than 1, and T is greater than P.

Optionally, the cosine distance between every two first central features among the K first central features is greater than a second preset threshold; and the cosine distance between every two second central features among the J second central features is greater than a third preset threshold.

By use of the model evaluation device 300 provided by the present disclosure, all the processes in the model evaluation method as described in the above embodiment can be performed, and the same beneficial effects can be produced. In order to avoid repetition, those processes and effects will not be described here.

According to an embodiment of the present disclosure, an electronic device and a computer-readable storage medium are further provided.

Fig. 5 is a block diagram of an electronic device configured to implement the model evaluation method according to the embodiment of the present disclosure. The electronic device is intended to indicate various forms of digital computers, such as laptops, desktops, workstations, personal digital assistants, servers, blade servers, mainframes, and other proper computers. The electronic device may further indicate various forms of mobile devices, such as personal digital processors, cellular telephones, smart phones, wearable devices, and other similar computing devices. The components, the connection and the relationship between the components, and the functions of the components, which are described herein, are merely for the purpose of illustration, and are not intended to limit the implementations of the present disclosure described and/or claimed herein.

As shown in Fig. 5, the electronic device includes one or more processors 501, a memory 502, and interfaces for connecting all components, including high-speed interfaces and low-speed interfaces. All the components are connected with each other through different buses and can be arranged on a common motherboard or in other manners as required. The processor can process the instructions which are executed within the electronic device, and the instructions include an instruction of graphical information, which is stored in or on the memory to display a graphical user interface (GUI) on an external input/output device (such as a display device coupled to the interfaces). In other implementations, if necessary, a plurality of processors and/or a plurality of buses can be used together with a plurality of memories. Moreover, a plurality of electronic devices can be connected, with each providing a part of necessary operations (for example, serving as a server array, a blade server group, or a multi-processor system). Fig. 5 illustrates an example that only one processor 501 is provided.

The memory 502 is a non-transitory computer-readable storage medium provided by the present disclosure. Instructions capable of being executed by at least one processor are stored on the memory, so as to allow the at least one processor to perform the model evaluation method provided by the present disclosure. The non-transitory computer-readable storage medium of the present disclosure has computer instructions stored thereon, and the computer instructions are used to allow a computer to perform the model evaluation method provided by the present disclosure.

As a non-transitory computer-readable storage medium, the memory 502 can be used to store non-transitory software programs, non-transitory computer-executable programs, and modules, such as the program instructions/modules corresponding to the model evaluation method provided by the embodiment of the present disclosure (e.g. the first obtaining module 301, the first voiceprint extraction module 302, the first clustering module 303, the first calculation module 304, the first evaluation module 305, the second obtaining module 306, the second voiceprint extraction module 307, the second clustering module 308, the second calculation module 309, and the second evaluation module 310 shown in Fig. 3 or 4). The processor 501 achieves various functional applications and data process of the model evaluation device by running the non-transitory software programs, instructions, and modules stored in the memory 502, so as to implement the model evaluation method described in the above method embodiment.

The memory 502 may include a program storage area and a data storage area. An operating system and the application programs required by at least one function can be stored in the program storage area; and the data created according to the use of the electronic device for implementing the model evaluation method and the like can be stored in the data storage area. Further, the memory 502 may include a high-speed random access memory, and a non-transitory memory, such as at least one magnetic disk, a flash memory, or other non-transitory solid state storage devices. In some embodiments, the memory 502 may include a memory located remotely relative to the processor 501, and the remote memory can be connected to the electronic device for implementing the model evaluation method via a network. The examples of the network include, but are not limited to, the Internet, the Intranet, local area networks, mobile communication networks, and the combinations thereof.

The electronic device for implementing the model evaluation method may further include an input device 503 and an output device 504. The processor 501, the memory 502, the input device 503 and the output device 504 may be connected through a bus or in other manner. Fig. 5 illustrates an example that the above components are connected through a bus.

The input device 503 can receive input numerical or character information and generate key signal input related to user settings and function control of the electronic device for implementing the model evaluation method, and may include a touch screen, a keypad, a mouse, a track pad, a touch pad, a pointing stick, one or more mouse buttons, a trackball, a joystick, and other input devices. The output device 504 may include a display device, an auxiliary lighting device (e.g. a light emitting diode (LED)), and a tactile feedback device (e.g. a vibrating motor). The display device may include, but is not limited to, a liquid crystal display (LCD), an LED display, and a plasma display. In some implementations, the display device is a touch screen.

The implementations of the systems and techniques described herein can be implemented as a digital electronic circuit system, an integrated circuit system, an application specific integrated circuit (ASIC), computer hardware, firmware, software, and/or the combinations thereof. The implementations may include an implementation in one or more computer programs that can be executed and/or interpreted on a programmable system including at least one programmable processor, which may be an application-specific programmable processor or a general-purpose programmable processor, with the data and instructions being capable of transmitted between a storage system, at least one input device, and at least one output device.

The computer programs (also known as programs, software, software applications, or codes) include machine instructions for the programmable processor, and can be executed by use of high-level processes and/or object-oriented programming languages, and/or assembly/machine languages. The terms "machine-readable medium" and "computer-readable medium" used herein refer to any computer program product, apparatus, and/or device (e.g. a magnetic disk, an optical disc, a memory, and a programmable logic device (PLD)), which are used to provide machine instructions and/or data for the programmable processor and include a machine-readable medium that receives the machine instructions used as machine-readable signals. The term "machine-readable signal" refers to any signal used to provide the machine instructions and/or data for the programmable processor.

For providing an interaction with a user, the systems and techniques described herein can be implemented on a computer, which is provided with a display device (e.g. a cathode-ray tube (CRT) monitor or an LCD monitor) for displaying information to the user, a keyboard and a pointing device (e.g. a mouse or a trackball), and the user can provide input for the computer through the keyboard and the pointing device. In addition, other devices may also be used for providing an interaction with the user. For example, the feedback provided for the user can be any form of sensory feedback (e.g. visual feedback, auditory feedback, or tactile feedback); and the input from the user can be received in any manner (including voice input, speech input and tactile input).

The systems and techniques described herein can be implemented as a computing system (e.g. a data server) including a back-end component, or a computing system (e.g. an application server) including a middleware component, or a computing system (e.g. a user computer equipped with a GUI or a web browser through which the user can interact with an implementation of the systems and techniques described herein) including a front-end component, or a computing system including any combination of the back-end, middleware, or front-end components. The components of the system can be connected with each other through any form of digital data communication (e.g. a communication network) or through digital data communications using any medium. The examples of the communication networks include an LAN, a wide area network (WAN), and the Internet.

The computer system may include a client and a server, which are generally arranged far away from each other and interact with each other through a communication network. A relationship between the client and the server is established by computer programs running on the corresponding computers and having client-server relationship.

In the embodiment, the M first voiceprint features are clustered to obtain the K first central features, and the N second voiceprint features are clustered to obtain the J second central features; and the cosine distances between the K first central features and the J second central features are calculated to obtain the first distance, so that the overall reproduction degree of the M first audio signals synthesized by using the first to-be-evaluated speech synthesis model can be evaluated based on the first distance. In this way, the reproduction degrees of a large batch of first audio signals can be evaluated quickly, which increases the evaluation efficiency of the first to-be-evaluated speech synthesis model. Therefore, the technical means solve the problem of low evaluation efficiency of personalized speech synthesis model in the prior art very well.

It should be understood that the various processes described above can be employed, with the steps therein being reordered, added or deleted. For example, as long as the expected results of the technical solutions of the present disclosure can be achieved, the steps described in the present disclosure can be performed in parallel, sequentially, or in different orders, which is not limited herein.

The above specific implementations are not intended to limit the protection scope of the present disclosure. It should be understood by those skilled in the art that various modifications, combinations, sub-combinations and substitutions can be made according to design requirements and other factors.

## Claims

1. A model evaluation method, comprising:
obtaining M first audio signals synthesized by using a first to-be-evaluated speech synthesis model, and obtaining N second audio signals generated through recording;
performing voiceprint extraction on each of the M first audio signals to obtain M first voiceprint features, and performing voiceprint extraction on each of the N second audio signals to obtain N second voiceprint features;
clustering the M first voiceprint features to obtain K first central features, and clustering the N second voiceprint features to obtain J second central features;
counting cosine distances between the K first central features and the J second central features to obtain a first distance; and
evaluating the first to-be-evaluated speech synthesis model based on the first distance;
wherein M, N, K and J are positive integers greater than 1, M is greater than K, and N is greater than J;
**characterized in that** the step of counting the cosine distances between the K first central features and the J second central features to obtain the first distance comprises:
for every first central feature, calculating the cosine distance between the first central feature and each of the second central features to obtain J cosine distances corresponding to the first central feature, and calculating a sum of the J cosine distances corresponding to the first central feature to obtain a cosine distance sum corresponding to the first central feature; and
calculating a sum of the cosine distance sums corresponding to the K first central features to obtain the first distance;
wherein the step of evaluating the first to-be-evaluated speech synthesis model based on the first distance comprises:
in the case where the first distance is smaller than a first preset threshold, determining that the evaluation of the first to-be-evaluated speech synthesis model is successful; and
in the case where the first distance is greater than or equal to the first preset threshold, determining that the evaluation of the first to-be-evaluated speech synthesis model is not successful.

2. The method of claim 1, after obtaining the M first audio signals synthesized by using the first to-be-evaluated speech synthesis model and obtaining the N second audio signals generated through recording, further comprising:
obtaining T third audio signals synthesized by using a second to-be-evaluated speech synthesis model;
performing voiceprint extraction on each of the T third audio signals to obtain T third voiceprint features;
clustering the T third voiceprint features to obtain P third central features;
counting cosine distances between the P third central features and the J second central features to obtain a second distance; and
evaluating the first to-be-evaluated speech synthesis model or the second to-be-evaluated speech synthesis model based on the first distance and the second distance;
wherein T and P are positive integers greater than 1, and T is greater than P.

3. The method of claim 1, wherein the step of clustering the M first voiceprint features to obtain K first central features comprises:
obtaining K first central features based on a criteria that a cosine distance between every two first central features among the K first central features is greater than a second preset threshold; and
the step of obtaining J second central features comprises:
obtaining J second central features based on a criteria that a cosine distance between every two second central features among the J second central features is greater than a third preset threshold.

4. A model evaluation device, comprising:
a first obtaining module, which is configured to obtain M first audio signals synthesized by using a first to-be-evaluated speech synthesis model, and obtain N second audio signals generated through recording;
a first voiceprint extraction module, which is configured to perform voiceprint extraction on each of the M first audio signals to obtain M first voiceprint features, and perform voiceprint extraction on each of the N second audio signals to obtain N second voiceprint features;
a first clustering module, which is configured to cluster the M first voiceprint features to obtain K first central features, and cluster the N second voiceprint features to obtain J second central features;
a first counting module, which is configured to count cosine distances between the K first central features and the J second central features to obtain a first distance; and
a first evaluation module, which is configured to evaluate the first to-be-evaluated speech synthesis model based on the first distance;
wherein M, N, K and J are positive integers greater than 1, M is greater than K, and N is greater than J;
**characterized in that** the first counting module is specifically configured to calculate, for every first central feature, the cosine distance between the first central feature and each second central feature to obtain J cosine distances corresponding to the first central feature, calculate a sum of the J cosine distances corresponding to the first central feature to obtain a cosine distance sum corresponding to the first central feature, and calculate a sum of the cosine distance sums corresponding to the K first central features to obtain the first distance;
wherein the first evaluation module is specifically configured to determine that the evaluation of the first to-be-evaluated speech synthesis model is successful in the case where the first distance is smaller than a first preset threshold, and determine that the evaluation of the first to-be-evaluated speech synthesis model is not successful in the case where the first distance is greater than or equal to the first preset threshold.

5. The device of claim 4, further comprising:
a second obtaining module, which is configured to obtain T third audio signals synthesized by using a second to-be-evaluated speech synthesis model;
a second voiceprint extraction module, which is configured to perform voiceprint extraction on each of the T third audio signals to obtain T third voiceprint features;
a second clustering module, which is configured to cluster the T third voiceprint features to obtain P third central features;
a second counting module, which is configured to count cosine distances between the P third central features and the J second central features to obtain a second distance; and
a second evaluation module, which is configured to evaluate the first to-be-evaluated speech synthesis model or the second to-be-evaluated speech synthesis model based on the first distance and the second distance;
wherein T and P are positive integers greater than 1, and T is greater than P.

6. The device of claim 4, wherein the K first central features are obtained on a basis of a criteria that a cosine distance between every two first central features among the K first central features is greater than a second preset threshold; and
the J second central features are obtained on a basis of a criteria that a cosine distance between every two second central features among the J second central features is greater than a third preset threshold.

7. An electronic device, comprising:
at least one processor; and
a memory which is connected to and communicates with the at least one processor; wherein,
instructions capable of being executed by the at least one processor are stored on the memory, and are executed by the at least one processor to allow the at least one processor to perform the model evaluation method of any one of claims 1 to 3.

8. A non-transitory computer-readable storage medium having computer instructions stored thereon, wherein the computer instructions are used to allow a computer to perform the model evaluation method of any one of claims 1 to 3.

## Patentansprüche

1. Modellbeurteilungsverfahren, welches aufweist:
Erhalten von M ersten Audiosignalen, die mittels eines ersten zu beurteilenden Sprachsynthesemodells synthetisiert werden, und Erhalten von N zweiten Audiosignalen, die durch Aufzeichnung erzeugt werden;
Ausführen von Stimmausdruckextraktion an jedem der M ersten Audiosignale, um M erste Stimmausdruckmerkmale zu erhalten, und Durchführen von Stimmausdruckextraktion an jedem der N zweiten Audiosignale, um N zweite Stimmausdruckmerkmale zu erhalten;
Clustern der M ersten Stimmausdruckmerkmale, um K erste zentrale Merkmale zu erhalten, und Clustern der N zweiten Stimmausdruckmerkmale, um J zweite zentrale Merkmale zu erhalten;
Zählen von Cosinus-Distanzen zwischen den K ersten zentralen Merkmalen und den J zweiten zentralen Merkmalen, um eine erste Distanz zu erhalten; und
Beurteilen des ersten zu bewertenden Sprachsynthesemodells basierend auf der ersten Distanz;
wobei M, N, K und J positive ganze Zahlen größer als 1 sind, M größer als K ist und N größer als J ist;
**dadurch gekennzeichnet, dass** der Schritt des Zählens der Cosinus-Distanzen zwischen den K ersten zentralen Merkmalen und den J zweiten zentralen Merkmalen zum Erhalt der ersten Distanz aufweist:
für jedes erste zentrale Merkmal, Berechnen der Cosinus-Distanz zwischen dem ersten zentralen Merkmal und jedem der zweiten zentralen Merkmale, um J Cosinus-Distanzen entsprechend dem ersten zentralen Merkmal zu erhalten, und Berechnen einer Summe der J Cosinus-Distanzen entsprechend dem ersten zentralen Merkmal, um eine Cosinus-Distanzsumme entsprechend dem ersten zentralen Merkmal zu erhalten; und
Berechnen einer Summe der Cosinus-Distanzsummen entsprechend den ersten K zentralen Merkmalen, um die erste Distanz zu erhalten;
wobei der Schritt des Beurteilens des ersten zu beurteilenden Sprachsynthesemodells basierend auf der ersten Distanz aufweist:
in dem Fall, in dem die erste Distanz kleiner als ein erster voreingestellter Schwellenwert ist, Bestimmen, dass die Beurteilung des ersten zu beurteilenden Sprachsynthesemodells erfolgreich ist; und
in dem Fall, in dem die erste Distanz größer als oder gleich dem ersten voreingestellten Schwellenwert ist, Bestimmen, dass die Beurteilung des ersten zu beurteilenden Sprachsynthesemodells nicht erfolgreich ist.

2. Das Verfahren von Anspruch 1, das, nach Erhalt der M ersten Audiosignale, die mittels des ersten zu beurteilenden Sprachsynthesemodells synthetisiert werden, und Erhalt der N zweiten Audiosignale, die durch Aufzeichnung erzeugt werden, ferner aufweist:
Erhalten von T dritten Audiosignalen, die mittels eines zweiten zu beurteilenden Sprachsynthesemodells synthetisiert werden;
Ausführen von Stimmausdruckextraktion an jedem der T dritten Audiosignale, um T dritte Stimmausdruckmerkmale zu erhalten;
Clustern der T dritten Stimmausdruckmerkmale, um P dritte zentrale Merkmale zu erhalten;
Zählen von Cosinus-Distanzen zwischen den P dritten zentralen Merkmalen und den J zweiten zentralen Merkmalen, um eine zweite Distanz zu erhalten; und
Beurteilen des ersten zu beurteilenden Sprachsynthesemodells oder des zweiten zu beurteilenden Sprachsynthesemodells basierend auf der ersten Distanz oder der zweiten Distanz;
wobei T und P positive ganze Zahlen größer als 1 sind, und T größer als P ist.

3. Das Verfahren von Anspruch 1, wobei der Schritt des Clusterns der M ersten Stimmausdruckmerkmale zum Erhalt von K ersten zentralen Merkmalen aufweist:
Erhalten von K ersten zentralen Merkmalen basierend auf einem Kriterium, dass eine Cosinus-Distanz zwischen allen zwei ersten zentralen Merkmalen unter den K ersten zentralen Merkmalen größer als ein zweiter voreingestellter Schwellenwert ist; und
der Schritt des Erhaltens von J zweiten Merkmalen aufweist:
Erhalten von J zweiten zentralen Merkmalen basierend auf einem Kriterium, dass eine Cosinus-Distanz zwischen allen zwei zweiten zentralen Merkmalen unter den J zweiten zentralen Merkmalen größer als ein dritter voreingestellter Schwellenwert ist.

4. Modellbeurteilungsvorrichtung, welche aufweist:
ein erstes Erhaltemodul, das konfiguriert ist zum Erhalten von M ersten Audiosignalen, die mittels eines ersten zu beurteilenden Sprachsynthesemodells synthetisiert werden, und Erhalten von N zweiten Audiosignalen, die durch Aufzeichnung erzeugt werden;
ein erstes Stimmausdruckextraktionsmodul, das konfiguriert ist zur Durchführung von Stimmausdruckextraktion an jedem der M ersten Audiosignale, um M erste Stimmausdruckmerkmale zu erhalten, und Durchführen von Stimmausdruckextraktion an jedem der N zweiten Audiosignale, um N zweite Stimmausdruckmerkmale zu erhalten;
ein erstes Clustermodul, das konfiguriert ist zum Clustern der M ersten Stimmausdruckmerkmale, um K erste zentrale Merkmale zu erhalten, und Clustern der N zweiten Stimmausdruckmerkmale, um J zweite zentrale Merkmale zu erhalten;
ein erstes Zählmodul, das konfiguriert ist zum Zählen von Cosinus-Distanzen zwischen den K ersten zentralen Merkmalen und den J zweiten zentralen Merkmalen, um eine erste Distanz zu erhalten; und
ein erstes Beurteilungsmodul, das konfiguriert ist zum Beurteilen des ersten zu bewertenden Sprachsynthesemodells basierend auf der ersten Distanz;
wobei M, N, K und J positive ganze Zahlen größer als 1 sind, M größer als K ist und N größer als J ist;
**dadurch gekennzeichnet, dass** das erste Zählmodul spezifisch konfiguriert ist zum Berechnen, für jedes erste zentrale Merkmal, der Cosinus-Distanz zwischen dem ersten zentralen Merkmal und jedem zweiten zentralen Merkmal, um J Cosinus-Distanzen entsprechend dem ersten zentralen Merkmal zu erhalten, Berechnen einer Summe der J Cosinus-Distanzen entsprechend dem ersten zentralen Merkmal, um eine Cosinus-Distanzsumme entsprechend dem ersten zentralen Merkmal zu erhalten; und Berechnen einer Summe der Cosinus-Distanzsummen entsprechend den ersten K zentralen Merkmalen, um die erste Distanz zu erhalten;
wobei das erste Beurteilungsmodul spezifisch konfiguriert ist zum Bestimmen, dass die Beurteilung des ersten zu beurteilenden Sprachsynthesemodells in dem Fall erfolgreich ist, in dem die erste Distanz kleiner als ein erster voreingestellter Schwellenwert ist, und zum Bestimmen, dass die Beurteilung des ersten zu beurteilenden Sprachsynthesemodells in dem Fall nicht erfolgreich ist, in dem die erste Distanz größer als oder gleich dem ersten voreingestellten Schwellenwert ist.

5. Die Vorrichtung von Anspruch 4, die ferner aufweist:
ein zweites Erhaltemodul, das konfiguriert ist zum Erhalt von T dritten Audiosignalen, die mittels eines zweiten zu beurteilenden Sprachsynthesemodells synthetisiert werden;
ein zweites Stimmausdruckextraktionsmodul, das konfiguriert ist zur Durchführung von Stimmausdruckextraktion an jedem der T dritten Audiosignale, um T dritte Stimmausdruckmerkmale zu erhalten;
ein zweites Cluster-Modul, das konfiguriert ist zum Clustern der T dritten Stimmausdruckmerkmale, um P dritte zentrale Merkmale zu erhalten;
ein zweites Zählmodul, das konfiguriert ist zum Zählen von Cosinus-Distanzen zwischen den P dritten zentralen Merkmalen und den J zweiten zentralen Merkmalen, um eine zweite Distanz zu erhalten; und
ein zweites Beurteilungsmodul, das konfiguriert ist zum Beurteilen des ersten zu beurteilenden Sprachsynthesemodells oder des zweiten zu beurteilenden Sprachsynthesemodells basierend auf der ersten Distanz oder der zweiten Distanz;
wobei T und P positive ganze Zahlen größer als 1 sind, und T größer als P ist.

6. Die Vorrichtung von Anspruch 4, wobei die K ersten zentralen Merkmale basierend auf einem Kriterium erhalten werden, dass eine Cosinus-Distanz zwischen allen zwei ersten zentralen Merkmalen unter den K ersten zentralen Merkmalen größer als ein zweiter voreingestellter Schwellenwert ist; und
die J zweiten zentralen Merkmale basierend auf einem Kriterium erhalten werden, dass eine Cosinus-Distanz zwischen allen zwei zweiten zentralen Merkmalen unter den J zweiten zentralen Merkmalen größer als ein dritter voreingestellter Schwellenwert ist.

7. Elektronische Vorrichtung, welche aufweist:
zumindest einen Prozessor; und
einen Speicher, der mit dem zumindest einen Prozessor verbunden ist und mit ihm kommuniziert, wobei
Instruktionen, die von dem zumindest einem Prozessor ausführbar sind, an dem Speicher gespeichert sind, und von dem zumindest einen Prozessor ausgeführt werden, um zu erlauben, dass der zumindest eine Prozessor das Modellbeurteilungsverfahren von einem der Ansprüche 1 bis 3 ausführt.

8. Nichtflüchtiges computerlesbares Speichermedium, auf dem Computerinstruktionen gespeichert sind, wobei die Computerinstruktionen benutzt werden, um einem Computer zu erlauben, das Modellbeurteilungsverfahren nach einem der Ansprüche 1 bis 3 auszuführen.

## Revendications

1. Procédé d'évaluation de modèle, comportant :
une obtention de M premiers signaux audio synthétisés en faisant appel à un premier modèle de synthèse de parole à évaluer, et une obtention de N deuxièmes signaux audio générés par le biais d'un enregistrement ;
une mise en oeuvre d'une extraction d'empreintes vocales sur chacun des M premiers signaux audio en vue d'obtenir M premières caractéristiques d'empreintes vocales, et une mise en oeuvre d'une extraction d'empreintes vocales sur chacun des N deuxièmes signaux audio en vue d'obtenir N deuxièmes caractéristiques d'empreintes vocales ;
un regroupement des M premières caractéristiques d'empreintes vocales en vue d'obtenir K premières caractéristiques centrales, et un regroupement des N deuxièmes caractéristiques d'empreintes vocales en vue d'obtenir J deuxièmes caractéristiques centrales ;
un comptage de distances cosinus entre les K premières caractéristiques centrales et les J deuxièmes caractéristiques centrales en vue d'obtenir une première distance ; et
une évaluation du premier modèle de synthèse de parole à évaluer sur la base de la première distance ;
dans lequel M, N, K et J sont des nombres entiers positifs supérieurs à 1, M est supérieur à K et N est supérieur à J ;
**caractérisé en ce que** l'étape visant à compter les distances cosinus entre les K premières caractéristiques centrales et les J deuxièmes caractéristiques centrales en vue d'obtenir la première distance comporte :
pour chaque première caractéristique centrale, un calcul de la distance cosinus entre la première caractéristique centrale et chacune des deuxièmes caractéristiques centrales, en vue d'obtenir J distances cosinus correspondant à la première caractéristique centrale, et un calcul d'une somme des J distances cosinus correspondant à la première caractéristique centrale, en vue d'obtenir une somme de distances cosinus correspondant à la première caractéristique centrale ; et
un calcul d'une somme des sommes de distances cosinus correspondant aux K premières caractéristiques centrales, en vue d'obtenir la première distance ;
dans lequel l'étape d'évaluation du premier modèle de synthèse de parole à évaluer sur la base de la première distance comporte :
dans le cas où la première distance est inférieure à un premier seuil prédéfini, le fait de déterminer que l'évaluation du premier modèle de synthèse de parole à évaluer est réussie ; et
dans le cas où la première distance est supérieure ou égale au premier seuil prédéfini, le fait de déterminer que l'évaluation du premier modèle de synthèse de parole à évaluer n'est pas réussie.

2. Procédé selon la revendication 1, comprenant en outre, après l'obtention des M premiers signaux audio synthétisés en faisant appel au premier modèle de synthèse de parole à évaluer et l'obtention des N deuxièmes signaux audio générés par le biais d'un enregistrement :
une obtention de T troisièmes signaux audio synthétisés en faisant appel à un second modèle de synthèse de parole à évaluer ;
une mise en oeuvre d'une extraction d'empreintes vocales sur chacun des T troisièmes signaux audio, en vue d'obtenir T troisièmes caractéristiques d'empreintes vocales ;
un regroupement des T troisièmes caractéristiques d'empreintes vocales, en vue d'obtenir P troisièmes caractéristiques centrales ;
un comptage de distances cosinus entre les P troisièmes caractéristiques centrales et les J deuxièmes caractéristiques centrales, en vue d'obtenir une seconde distance ; et
une évaluation du premier modèle de synthèse de parole à évaluer ou du second modèle de synthèse de parole à évaluer, sur la base de la première distance et de la seconde distance ;
dans lequel T et P sont des nombres entiers positifs supérieurs à 1, et T est supérieur à P.

3. Procédé selon la revendication 1, dans laquelle l'étape de regroupement des M premières caractéristiques d'empreintes vocales, en vue d'obtenir K premières caractéristiques centrales, comporte :
une obtention de K premières caractéristiques centrales sur la base d'un critère selon lequel la distance cosinus entre chaque deux premières caractéristiques centrales parmi les K premières caractéristiques centrales est supérieure à un deuxième seuil prédéfini ; et
l'étape d'obtention des J deuxièmes caractéristiques centrales comporte :
une obtention de J deuxièmes caractéristiques centrales sur la base d'un critère selon lequel une distance cosinus entre chaque deux deuxièmes caractéristiques centrales parmi les J deuxièmes caractéristiques centrales est supérieure à un troisième seuil prédéfini.

4. Dispositif d'évaluation de modèle, comportant :
un premier module d'obtention, lequel est configuré de manière à obtenir M premiers signaux audio synthétisés en faisant appel à un premier modèle de synthèse de parole à évaluer, et à obtenir N deuxièmes signaux audio générés par le biais d'un enregistrement ;
un premier module d'extraction d'empreintes vocales, lequel est configuré de manière à mettre en oeuvre une extraction d'empreintes vocales sur chacun des M premiers signaux audio, en vue d'obtenir M premières caractéristiques d'empreintes vocales, et à mettre en oeuvre une extraction d'empreintes vocales sur chacun des N deuxièmes signaux audio en vue d'obtenir N deuxièmes caractéristiques d'empreintes vocales ;
un premier module de regroupement, lequel est configuré de manière à regrouper les M premières caractéristiques d'empreintes vocales, en vue d'obtenir K premières caractéristiques centrales, et à regrouper les N deuxièmes caractéristiques d'empreintes vocales, en vue d'obtenir J deuxièmes caractéristiques centrales ;
un premier module de comptage, lequel est configuré de manière à compter des distances cosinus entre les K premières caractéristiques centrales et les J deuxièmes caractéristiques centrales, en vue d'obtenir une première distance ; et
un premier module d'évaluation, lequel est configuré de manière à évaluer le premier modèle de synthèse de parole à évaluer, sur la base de la première distance ;
dans lequel M, N, K et J sont des nombres entiers positifs supérieurs à 1, M est supérieur à K et N est supérieur à J ;
**caractérisé en ce que** le premier module de comptage est spécifiquement configuré de manière à calculer, pour chaque première caractéristique centrale, la distance cosinus entre la première caractéristique centrale et chaque deuxième caractéristique centrale, en vue d'obtenir J distances cosinus correspondant à la première caractéristique centrale, à calculer une somme des J distances cosinus correspondant à la première caractéristique centrale, en vue d'obtenir une somme de distances cosinus correspondant à la première caractéristique centrale, et à calculer une somme des sommes de distances cosinus correspondant aux K premières caractéristiques centrales, en vue d'obtenir la première distance ;
dans lequel le premier module d'évaluation est spécifiquement configuré de manière à déterminer que l'évaluation du premier modèle de synthèse de parole à évaluer est réussie dans le cas où la première distance est inférieure à un premier seuil prédéfini, et à déterminer que l'évaluation du premier modèle de synthèse de parole à évaluer n'est pas réussie dans le cas où la première distance est supérieure ou égale au premier seuil prédéfini.

5. Dispositif selon la revendication 4, comprenant en outre :
un second module d'obtention, lequel est configuré de manière à obtenir T troisièmes signaux audio synthétisés en faisant appel à un second modèle de synthèse de parole à évaluer ;
un second module d'extraction d'empreintes vocales, lequel est configuré de manière à mettre en oeuvre une extraction d'empreintes vocales sur chacun des T troisièmes signaux audio, en vue d'obtenir T troisièmes caractéristiques d'empreintes vocales ;
un second module de regroupement, configuré de manière à regrouper les T troisièmes caractéristiques d'empreintes vocales, en vue d'obtenir P troisièmes caractéristiques centrales ;
un second module de comptage, lequel est configuré de manière à compter des distances cosinus entre les P troisièmes caractéristiques centrales et les J deuxièmes caractéristiques centrales, en vue d'obtenir une seconde distance ; et
un second module d'évaluation, lequel est configuré de manière à évaluer le premier modèle de synthèse de parole à évaluer ou le second modèle de synthèse de parole à évaluer, sur la base de la première distance et de la seconde distance ;
dans lequel T et P sont des nombres entiers positifs supérieurs à 1, et T est supérieur à P.

6. Dispositif selon la revendication 4, dans lequel les K premières caractéristiques centrales sont obtenues sur la base d'un critère selon lequel une distance cosinus entre chaque paire de premières caractéristiques centrales parmi les K premières caractéristiques centrales est supérieure à un deuxième seuil prédéfini ; et
dans lequel les J deuxièmes caractéristiques centrales sont obtenues sur la base d'un critère selon lequel une distance cosinus entre chaque paire de deuxièmes caractéristiques centrales parmi les J deuxièmes caractéristiques centrales est supérieure à un troisième seuil prédéfini.

7. Dispositif électronique, comprenant :
au moins un processeur ; et
une mémoire qui est connectée audit au moins un processeur et qui communique avec ledit au moins un processeur ; dans lequel,
des instructions pouvant être exécutées par ledit au moins un processeur sont stockées dans la mémoire et sont exécutées par ledit au moins un processeur pour permettre audit au moins un processeur de mettre en oeuvre le procédé d'évaluation de modèle selon l'une quelconque des revendications 1 à 3.

8. Support de stockage non transitoire lisible par ordinateur sur lequel sont stockées des instructions d'ordinateur, dans lequel les instructions d'ordinateur sont utilisées pour permettre à un ordinateur de mettre en oeuvre le procédé d'évaluation de modèle selon l'une quelconque des revendications 1 à 3.
